(19) **Europäisches Patentamt European Patent Office Office européen des brevets**

(11) **EP 2 037 646 B1**

(12) **EUROPEAN PATENT SPECIFICATION**

(45) Date of publication and mention of the grant of the patent:
**11.10.2017  Bulletin 2017/41**

(51) Int Cl.:
***H04L 25/03*** *(2006.01)*

(21) Application number: **08015477.6**

(22) Date of filing: **02.09.2008**

(54) **Adaptive precoding in Codebook based MIMO systems**

Adaptive Vorkodierung in Codebuch-basierten MIMO-Systemen

Précodage adaptatif dans un système MIMO utilisant des livres de codification

(84) Designated Contracting States:
**DE GB**

(30) Priority:  **11.09.2007   CN 200710149294**

(43) Date of publication of application:
**18.03.2009   Bulletin 2009/12**

(73) Proprietor: **NTT DoCoMo, Inc.
Chiyoda-Ku
Tokyo 100-6150 (JP)**

(72) Inventors:
• **Zhu, Jianchi
Beijing, 100080 (CN)**
• **Liu, Jingxiu
Beijing, 100080 (CN)**
• **She, Xiaoming
Beijing, 100080 (CN)**
• **Chen, Lan
Beijing, 100080 (CN)**

(74) Representative: **Zimmermann, Tankred Klaus et al
Schoppe, Zimmermann, Stöckeler
Zinkler, Schenk & Partner mbB
Patentanwälte
Radlkoferstrasse 2
81373 München (DE)**

(56) References cited:
• **JAMES S KIM ET AL: "Multi-Mode Multi-User MIMO System with Finite Rate Feedback", IEEE 3RD INTERNATIONAL SYMPOSIUM ON WIRELESS COMMUNICATION SYSTEMS - ISWCS '06, 1 September 2006 (2006-09-01), pages 219-222, XP031152062, USA ISBN: 978-1-4244-0397-4**
• **SAMSUNG: "Dynamic Mode Switching between Single and Multi-User MIMO", 3GPP DRAFT; R1-062525, vol. RAN WG1, no. Seoul, Korea; 20061004, 4 October 2006 (2006-10-04), XP050103047, [retrieved on 2006-10-04]**
• **FREESCALE SEMICONDUCTOR INC: "Results on Zero-forcing MU-MIMO", 3GPP DRAFT; R1-071511, vol. RAN WG1, no. St. Julian; 20070403, 3 April 2007 (2007-04-03), XP050105444, [retrieved on 2007-04-03]**

EP 2 037 646 B1

## Description

## Field of the Invention

The present invention relates to the 3GPP LTE (Third Generation Partnership Project Long Term Evolution) standardization process field, and more particularly to a method and apparatus for adaptive precoding in a codebook-based MIMO system.

## Background

In a codebook-based MIMO (Multi-input and Multi-output) transmission system, it can greatly improve the throughput and spectrum efficiency of the wireless mobile communication system by limited feedback information. Therefore, codebook based MIMO transmission technology is one of the most important technologies for the future mobile communication.

During the 3GPP LTE standardization process, codebook-based MIMO transmission technology generally relates to the following four aspects:

## I. MIMO Transmission Mode

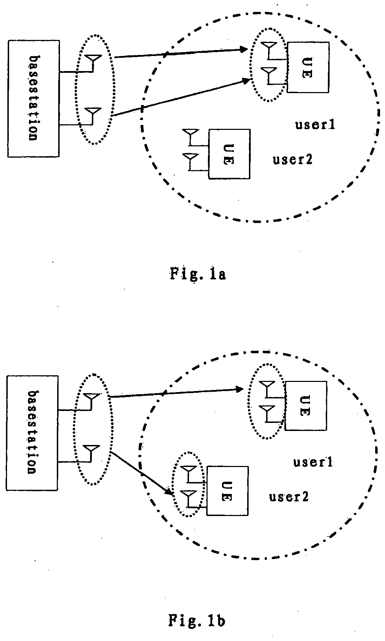

As shown in Fig. 1a and Fig. 1b, the MIMO transmission modes can be divided into SU-MIMO (single user MIMO) mode and MU-MIMO (multi-user MIMO) mode.

In SU-MIMO mode, a single user occupies the whole resource block (RB). SU-MIMO is applicable for maximizing the user peak rate.

## 2) MU-MIMO

In MU-MIMO mode, multiple users share one resource block. The MU-MIMO is applicable for maximizing the system throughput and spectrum efficiency.

## II. MU-MIMO Precoding Method

MU-MIMO precoding method includes Unitary Precoding (UP) and Zero-forcing Beamforming (ZF-BF).

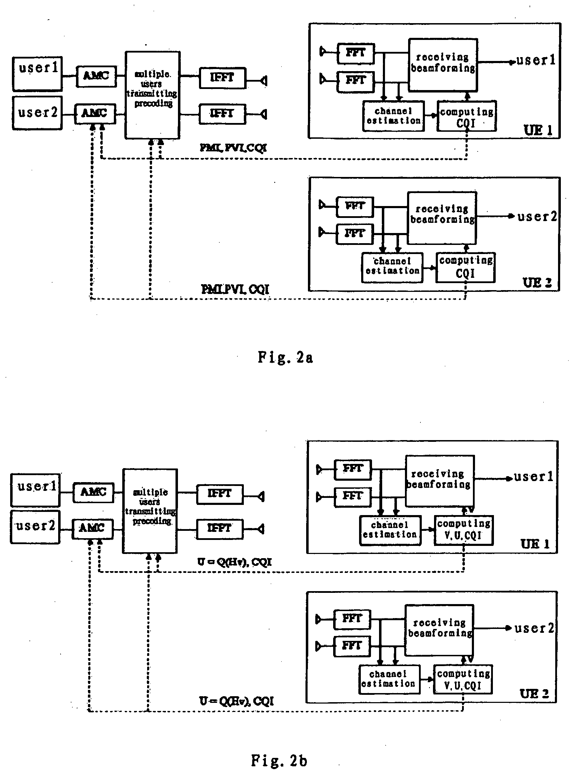

1) As shown in Fig. 2a, UP includes the following characteristics.

a) Each user feeds back the precoding vector and CQI with best performance;
b) The multi-user interference is eliminated at the user side;
c) Performance of the UP is influenced by the user pair;
d) Space multiplexing data stream is limited by the number of user receiving antennas.

2) As shown in Fig. 2b, ZF-BF includes the following characteristics:

a) Each user feeds back the quantized channel and quantized CQI to the base station;
b) The multi-user interference is eliminated at the base station side.

## III. ZF-BF Codebook Design

The ZF-BF codebook includes DFT (Discrete Fourier Transform) codebook and Grassmannian codebook.

## IV. Factors Influencing Spatial Transmission Correlation (Tx correlation)

1) Space between Antennas: a larger space between antennas results in a smaller spatial correlation; a smaller space between antennas results in a larger spatial correlation.
2) Scatters around Antenna Array: the scatters around the antenna array change with time and therefore the spatial correlations are different at different time; since a signal passes different scatters because of the different distribution locations of users when transmitting form the base station to the user, the spatial transmission correlations are Different for different users.

Disadvantages of the prior art include the followings:

## I. Disadvantages of MIMO Transmission Mode

SU-MIMO

When there are fewer users in a cell (sector), the performance of SU-MIMO is better than MU-MIMO.

When there are many users in the cell (sector), the multi-user diversity gain by the space multiplexing is lost in the SU-MIMO.

## 2) MU-MIMO

When there are fewer users in a cell (sector), a problem of user pair occurs.

When there are many users in the cell (sector), the MU-MIMO can great improve the system throughput and frequency spectrum efficiency. The performance of MU-MIMO is better than SU-MIMO.

3) In situations with different spatial correlation, the performance of SU-MIMO and of MU-MIMO are different, but in prior art it cannot perform optimal selection from the SU-MIMO and MU-MIMO based on the situation changing.

## II. Disadvantages of MU-MIMO Precoding Method

When the spatial correlation is low, the performance of UP is better than that of ZF-BF; and when the spatial correlation is high, the performance of ZF-BF is better than that of UP. However, in prior art, it cannot make optimal selection from UP and ZF-BF based on the situation changing

## III. Disadvantages of Codebook Design for ZF-BF

When the spatial correlation is low, the performance of Grassmannian codebook is better than that of DFT codebook; and when the spatial correlation is high, the performance of the DFT codebook is better than that of Grassmannian codebook. However, in prior art, it cannot make optimal selection from Grassmannian codebook and DFT codebook based on situation changing.

## IV. Disadvantages of Size of MU-MIMO codebook

When there are fewer users in a cell, the performance of a smaller size codebook is better than that of a larger size codebook; whereas, when there are many users in the cell, the performance of a larger size codebook is better than that of a smaller size codebook. However, in prior art, it cannot make optimal selection from the smaller size codebook and the larger size codebook based on situation changing.

The paper named "Multi-Mode Multi-User MIMO System with Finite Rate Feedback" relates to a precoded Multi-user MIMO transmission scheme with rank selection and Single User/Multi-user MIMO mode switch, which is called multi-mode pre-user unitary rate control.

The paper named "Dynamic Mode Switching between Single and Multi-user MIMO" relates to comparison of dynamic SU/MU MIMO mode switching approaches based on PARC and SVAP for 2x2 MIMO. Numerical simulation reveals that the throughput of dynamic switching scheme based on PARC is superior.

## Summary of the Invention

An object of the present invention is to provide a method and an apparatus for adaptive precoding in a MIMO system, which solve the existing problems in prior art that it cannot perform switching between different user modes, between different precoding methods, between different codebooks and between different sizes of codebooks, according to changes of user number and changes of the spatial correlation, and to solve the existing problem that it cannot make optimal selection.

In order to achieve the above objects, the present invention provides a method for adaptive precoding in a codebook-based MIMO system, which includes the following steps:

Step 1: obtaining a switching threshold or a switching threshold table corresponding to a spatial transmission correlation according to priori values obtained by testing under different conditions;

Step 2: according to the switching threshold or the switching threshold table and in combination with the spatial transmission correlation, selecting to launch one or more switching from a group including: switching between SU-MIMO mode and MU-MIMO mode in consideration of user number information; switching between unitary precoding and Zero-forcing Beamforming precoding in MU-MIMO mode; switching between Discrete Fourier Transform codebook and Grassmannian codebook in Zero-forcing Beamforming precoding; switching between a large codebook and a small codebook according to user number information in MU-MIMO mode.

According to the above method, in Step 2, the spatial transmission correlation is obtained by user feedback or by symmetry of an uplink channel and a downlink channel, wherein steps of obtaining the spatial transmission correlation by user feedback includes: each user in the same cell measures the spatial correlation according to the formula $Corr_k^{Tx} = E\left\{H_k^H H_k\right\}$ where $Corr_k^{Tx}$ represents the spatial correlation received by user $k$ at a receiving end and $H_k$ represents the channel matrix of user $k$; and then each user feedbacks the measured spatial correlation to the base station.

According to the above method, in Step 2, the switching between SU-MIMO mode and MU-MIMO mode specifically includes:

Step a. the base station calculating an equivalent correlation after obtaining the spatial correlation fed back from the user;

Step b. the base station looking up the switching threshold table based on the equivalent correlation and obtaining a switching threshold indicating user number;

Step c. the base station determining whether the user number in a current cell is larger than the switching threshold, and if yes, the base station adopting MU-MIMO mode; otherwise the base station adopting SU-MIMO mode.

According to the above method, in Step c, when the user number in the current cell is larger than the switching threshold, if the current MIMO mode is SU-MIMO mode, sending signaling to notify the user to launch switching to MU-MIMO mode and if the current MIMO mode is MU-MIMO mode, performing no operations; when the user number in the current cell is smaller than the switching threshold, if the current MIMO mode is SU-MIMO mode, performing no operations, and if the current MIMO mode is MU-MIMO mode, sending signaling to notify the user to launch switching to SU-MIMO mode.

According to the above method, in Step c, all the users are scheduled together, all the users work in the same MIMO mode and all the resource blocks work in the same MIMO mode.

According to the above method, in Step 2, the switching between SU-MIMO mode and MU-MIMO mode specifically includes:

> Step a1. the base station looking up and obtaining the switching threshold after obtaining the spatial correlation fed back from the user;
> Step b1. if the spatial correlation fed back from a user is larger than the switching threshold, adopting MU-MIMO mode for the user; otherwise adopting SU-MIMO mode for the user.

According to the above method, different users may work in different MIMO modes; the resource block occupied by a user that works in SU-MIMO mode also works in SU-MIMO mode and the resource block occupied by a user that works in MU-MIMO mode also works in MU-MIMO mode.

According to the above method, in Step 2, the switching between unitary precoding and Zero-forcing Beamforming precoding specifically includes:

> Step a2. the base station calculating an equivalent correlation after obtaining the spatial correlation fed back from the user;
> Step b2. the base station looking up and obtaining the switching threshold based on the equivalent correlation;
> Step c2. the base station determining whether the equivalent correlation is larger than the switching threshold, and if yes, adopting Zero-forcing Beamforming precoding; otherwise adopting unitary precoding.

According to the above method, in Step c2, all the users are scheduled together, all the users work in the same precoding mode and all the resource blocks work in the same precoding mode.

According to the above method, in Step 2, the switching between unitary precoding and Zero-forcing Beamforming precoding specifically includes:

> Step a3. the base station looking up and obtaining the switching threshold after obtaining the spatial correlation fed back from the user;
> Step b3. if the spatial correlation fed back from a user is larger than the switching threshold, adopting Zero-forcing Beamforming precoding for the user; otherwise adopting unitary precoding for the user.

According to the above method, different users work in different precoding modes; the resource block occupied by a user that works in unitary preceding mode also works in unitary precoding mode and the resource block occupied by a user that works in Zero-forcing Beamforming precoding mode also works in Zero-forcing Beamforming precoding mode.

According to the above method, in Step 2, the switching between Discrete Fourier Transform codebook and Grassmannian codebook specifically includes:

> Step a4. the base station calculating the equivalent correlation after obtaining the spatial correlation fed back from the user;
> Step b4. the base station looking up and obtaining the switching threshold based on the equivalent correlation;
> Step c4. the base station determining whether the equivalent correlation is larger than the switching threshold, and if yes, adopting Discrete Fourier Transform codebook; otherwise adopting Grassmannian codebook.

According to the above method, in Step c4, all the users are scheduled together, all the users work with the same codebook and all the resource blocks work with the same codebook.

According to the above method, in Step 2, the switching between Discrete Fourier Transform codebook and Grassmannian codebook specifically includes:

> Step a5 the base station looking up and obtaining a switching threshold after obtaining the spatial correlation fed back from the user;
> Step b5. if the spatial correlation fed back from a user is larger than the switching threshold, adopting Discrete Fourier Transform codebook for the user; otherwise adopting Grassmannian codebook for the user.

According to the above method, different users work with different codebooks; the resource block occupied by a user that works with Discrete Fourier Transform codebook also works with Discrete Fourier Transform codebook, and the resource block occupied by a user that works with Grassmannian codebook also works with Grassmannian codebook.

According to the above method, in Step 2, the switching between the large codebook and the small codebook specifically includes:

> Step a6. the base station looking up and obtaining the switching threshold representing the user number;
> Step b6. the base station determining whether the user number in a current cell is larger than the switching threshold, and if yes the base station adopting the large codebook; otherwise the base station adopting the small codebook.

According to the above method, in Step b6, all the users are scheduled together, all the users work with a same codebook and all the resource blocks work with a same codebook.

According to the above method, different users work with different codebooks; the resource block occupied by a user that works with the large codebook also works with the large codebook, and the resource block occupied by a user that works with the small codebook also works with the small codebook.

According to the above method, in Step 1, different switching thresholds or different switching threshold tables are determined according to different channels.

In order to achieve the above objects, the present invention provides an apparatus for adaptive precoding in a codebook-based MIMO system, including: a storage module located at a base station, for storing a switching threshold or a switching threshold table which are corresponding to a spatial correlation and obtained based on priori values obtained by testing under different conditions; a determining module located at the base station, for performing comparison between the threshold and the spatial correlation fed back from a user according to the switching threshold or the switching threshold table, and notifying the user to launch switching according to the comparison result; a switching module allocated at user end, for performing one or more switching from a group including: switching between SU-MIMO mode and MU-MIMO mode, switching between unitary precoding and Zero-forcing Beamforming precoding, switching between Discrete Fourier Transform codebook and Grassmannian codebook, and switching between a large codebook and a small codebook in unitary precoding; a detecting module located at user end, for performing one or more of detections including detection of SU-MIMO mode and MU-MIMO mode, detection of unitary precoding and Zero-forcing Beamforming precoding, detection of Discrete Fourier Transform codebook and Grassmannian codebook, and detection of large size codebook and small size codebook with unitary precoding.

The above apparatus further includes a spatial correlation feedback module located at the user end, for measuring the spatial correlation according to the formula $Corr_k^{Tx} = E\left\{ H_k^H H_k \right\}$, where $Corr_k^{Tx}$ represents the spatial correlation received by user $k$ at a receiving end and $H_k$ represents a channel matrix of user $k$; and then feeding back the measured Tx correlation to the base station.

The above apparatus further includes an equivalent correlation calculating module, for calculating an equivalent correlation.

The present invention further provides a method for adaptive precoding in a codebook-based MIMO system, comprising:

step 1: obtaining a switching threshold or a switching threshold table corresponding to spatial receiving correlation based on priori values obtained by testing under different conditions;

step 2: according to the switching threshold or the switching threshold table and in combination with the spatial receiving correlation, selecting to launch one or more of switching including: switching between SU-MIMO mode and MU-MIMO mode in consideration of user number information; switching between unitary precoding and Zero-forcing Beamforming precoding in MU-MIMO mode; switching between Discrete Fourier Transform codebook and Grassmannian codebook in Zero-forcing Beamforming precoding; switching between a large size codebook and a small size codebook according to user number information in MU-MIMO mode.

According to embodiments, in step 2, the spatial receiving correlation is obtained by user feedback or by symmetry of the uplink channel and the downlink channel, wherein steps of obtaining the spatial receiving correlation by user feedback comprises: each user in the same cell measures the spatial receiving correlation according to the formula $Corr_k^{Rx} = E\left\{ H_k H_k^H \right\}$ where $Corr_k^{Rx}$ represents the spatial receiving correlation received by user $k$ at the receiving end and $H_k$ represents the channel miatrix of user $k$, and then each user feeds the measured spatial receiving correlation to the base station.

The effects of the present invention are that the switching can be made between different MIMO modes, precoding methods and codebooks according to the change of the environment and an optimal one can be selected, and therefore the switching method of the present invention is better than the method by separate SU-MIMO, MU-MIMO, UP precoding, ZF-BF precoding, DFT codebook; Grassmannian codebook, large size codebook or small size codebook.

**Brief Description of the Drawings**

Fig. 1a and Fig. 1b are schematic diagrams showing SU-MIMO and MU-MIMO;
Fig. 2a and Fig. 2b are schematic diagrams showing UP precoding and ZF-BF precoding;
Fig. 3 is a schematic diagram showing architecture of a base station and a user equipment used in switching between SU-MIMO and MU-MIMO according to the present invention;
Fig. 4a to Fig. 4d are schematic diagrams showing a simulation result of obtaining a priori value according to the present invention;
Fig. 5 is a flow chart showing the switching process between SU-MIMO and MU-MIMO according to the present invention;

Fig. 6 is a schematic diagram showing architecture of a base station and a user equipment used in switching between UP precoding and ZF-BF precoding according to the present invention;

Fig. 7 is a schematic diagram showing a simulation result of determining a priori value of the UP and ZF-BF switching threshold according to the present invention;

Fig. 8 is a flow chart showing the switching between the UP and the ZF-BF according to the present invention;

Fig. 9 is a schematic diagram showing architecture of a base station and a user equipment used in a codebook switching according to the present invention;

Fig. 10 is a schematic diagram showing a simulation result of determining a priori value of switching threshold in codebook switching method according to the present invention;

Fig. 11 is a flow chart showing the codebook switching method according to the present invention;

Fig. 12 is a diagram for comparing the SU-MIMO-MU-MIMO switching method in the present invention with separate SU-MIMO mode or MU-MIMO mode;

Fig. 13 is a diagram for comparing the precoding switching method of the present invention with separate UP or ZF-BF precoding;

Fig. 14 is a diagram for comparing the codebook switching method of the present invention with a separate DFT or Grassmannian codebook switching; and

Fig. 15 is a schematic diagram showing an apparatus according to the present invention.

## Detailed Description of the Invention

To make the objective, technical solution and advantages of the present invention more apparent, a detailed description will be made with reference to specific embodiments in connection with the accompanied drawings.

According to the present invention, different switching thresholds or Different switching threshold tables can be determined according to different types of channels, wherein the types of channels include TU, VA and VB etc. The following method is a quasi-static switching method and a switching interval may be 100ms for example.

The spatial correlation for determining switching thresholds in the present invention can be either a spatial transmission correlation or a spatial receiving correlation. The following descriptions will be given to explain three switching processes by taking the spatial transmission correlation as example. The basic principle of the three switching processes based on the spatial receiving correlation is similar to that of the spatial transmission correlation, and the difference is that the formula for computing spatial receiving correlation is different from that for computing spatial transmission correlation.

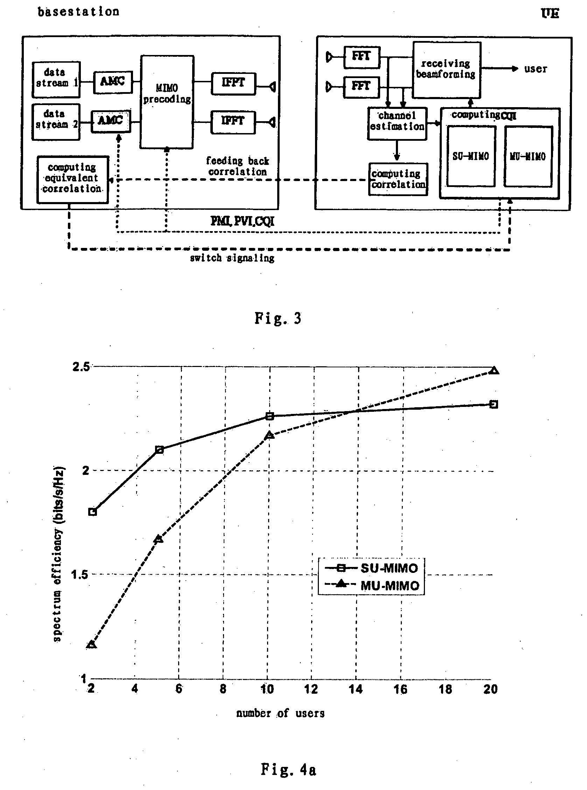

I. Switching Between SU-MIMO and MU-MIMO (related with user number) (architecture of a base station and a user equipment shown in Fig. 3)

1. Cell Specific (Switching by the whole cell)

1) Switching Threshold Table

The switching between SU-MIMO and MU-MIMO is performed according to the user number in the cell (sector). Different switching thresholds correspond to different spatial transmission correlations, and according to the present invention, the threshold is set based on a result of simulation experience.

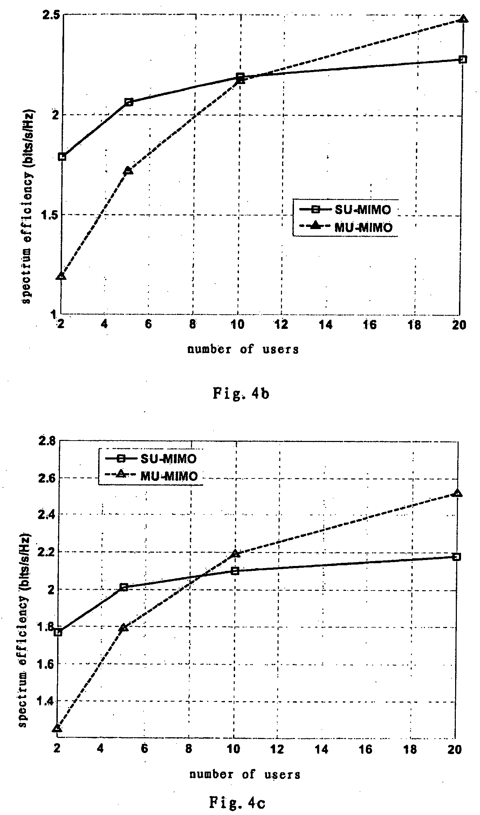

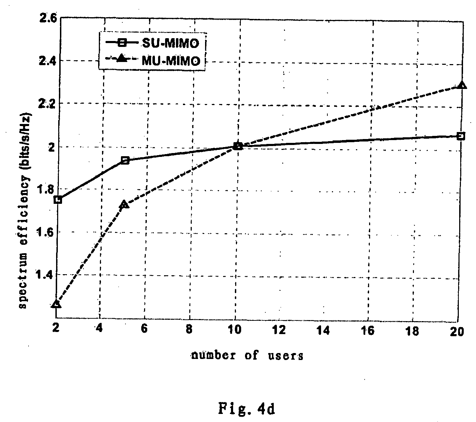

Fig. 4a to Fig. 4b are diagrams showing simulation results, which respectively show relations between the system performance (y-axis) and the user number (x-axis) when the spatial correlation (Tx correlation) is at 0, 0.3, 0.7 and 1.

According to the simulation results, the following switching threshold table is obtained.

| Tx correlation | Switching threshold (user number) |
|---|---|
| 0~0.2 | 13 |
| 0.2~0.5 | 11 |
| 0.5~0.8 | 9 |
| 0.8~1.0 | 10 |

The switching threshold table shows that different Tx correlation corresponds to different switching threshold. For example, when the Tx correlation is between 0 and 0.2, it is shown the switching threshold is 13 users by looking up the table, and when the Tx correlation is between 0.5 and 0.8, it is shown the switching threshold is 9 users by looking up the table.

Different switching threshold tables can be determined according to different channels.

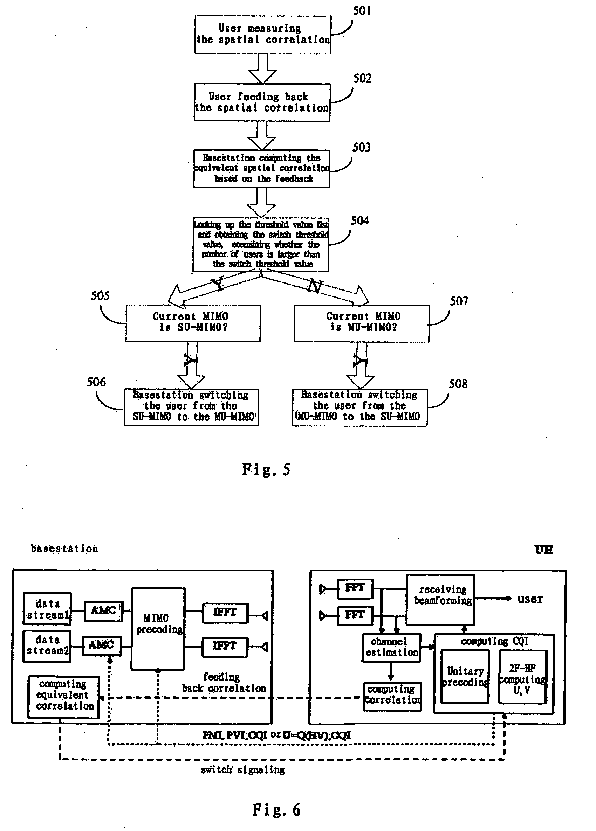

2) Switching Flow (shown in Fig. 5)

The user number is used in the switching process. The base station obtains the user number in the cell (sector) by previous signaling and here no additional signaling is needed. The base station uses the user number directly in the switching process.

The switching flow specifically includes the following steps.

In step 501, each user in the same cell (sector) measures the spatial transmission or receiving correlation respectively.

Specifically, the spatial transmission correlation can be measured by using the formula

$Corr_k^{Tx} = E\left\{H_k^H H_k\right\}$ where $Corr_k^{Tx}$ represents the spatial transmission correlation received by user $k$ at a receiving end and $H_k$ represents the channel matrix of user.

The spatial receiving correlation can be measured by using the formula $Corr_k^{Rx} = E\left\{H_k H_k^H\right\}$

In step 502, each user feeds back the measured spatial correlation to the base station.

In step 503, after the base station obtains the feedback information, it calculates the equivalent spatial transmission correlation $Corr_{eq}$ according to different spatial transmission correlations fed back from the users by using the formula $Corr_{eq} = \dfrac{1}{K}\sum_{k=1}^{K} Corr_k^{Tx}$ where $K$ represents the user number in the cell (sector).

If the spatial receiving correlation is fed back, the formula can be changed accordingly, and specifically the equivalent spatial receiving correlation is computing by the formula $Corr_{eq} = \dfrac{1}{K}\sum_{k=1}^{K} Corr_k^{Rx}$.

In step 504, after the base station obtains the equivalent correlation, it looks up the switching threshold table stored in the base station and obtains the switching threshold (user number) and then compares the user number in the cell (sector) with the threshold obtained by looking up the table.

In step 505, when the user number in the cell (sector) is larger than the threshold, if the user is in SU-MIMO mode, the base station switches the user from SU-MIMO to MU-MIMO mode (notifies the user through signaling) in Step 506 and if the user is in MU-MIMO mode, the base station does not perform any operations and the user remains at the current status.

In step 507, when the user number in the cell (sector) is smaller than the threshold, if the user is in MU-MIMO mode, the base station switches the user from MU-MIMO to SU-MIMO mode (notifies the user through signaling) in Step 508 and if the user is in SU-MIMO mode, the base station does not perform any processing and the user remains the current status.

3) Scheduling Method

All the users are scheduled together, all the users work in the same MIMO mode and all the resource blocks work in the same mode (i.e. SU-MIMO or MU-MIMO mode).

2. UE Specific (Switching by individual user)

1) Switching Threshold

The threshold is set as a result of simulation experience according to the spatial correlation.

According to different channels, different switching thresholds can be determined.

2) Switching Flow

Each user in the same cell (sector) measures the spatial transmission correlation respectively by using the formula $Corr_k^{Tx} = E\left\{H_k^H H_k\right\}$ where $Corr_k^{Tx}$ represents the spatial transmission correlation received by user $k$ at a receiving end and $H_k$ represents the channel matrix of user. Each user feeds back the measured spatial transmission correlation to the base station. After the base station obtains the feedback information, it compares the spatial transmission correlations fed back from different users with the switching thresholds stored in the base station. When the spatial transmission correlation fed back from the user is larger than the threshold, if the user is in SU-MIMO mode, the base station switches the user from SU-MIMO to MU-MIMO mode by notifying the user through signaling and if the user is in MU-MIMO mode, the base station does not perform any processing and the user remains the current status. When the spatial transmission correlation fed back from the user is smaller than the threshold, if the user is in MU-MIMO mode, the base station switches the user from MU-MIMO to SU-MIMO mode by notifying the user through signaling and if the user is in SU-MIMO mode, the base station does not perform any processing and the user remains the current status.

3) Scheduling Method

Users work in SU-MIMO mode and users work in MU-MIMO mode calculate and feed their CQIs respectively to the BS, and the base station schedules according to a certain scheduling principle and the CQIs fed back from all the users. Different users work in different MIMO nodes; different resource blocks work in different MIMO modes. If the scheduling result of some resource block is that the user working in SU-MIMO occupies this resource block, this resource block will work in SU-MIMO mode; and if the scheduling result of some resource block is that the user working in MU-MIMO occupies this resource block, this resource block will work in MU-MIMO mode.

II. Switching between UP and ZF-BF in MU-MIMO (related with the number of antennas)

Fig. 6 is a schematic diagram showing architecture of a base station and a user equipment. The number of antennas of the user is used during the switching process. The base station obtains the number of antennas of the user in the cell (sector) by former signaling and here no additional signaling is needed The base station uses the number of antennas of the user directly in the switching process.

## 1. Cell Specific

The number of antennas of the user supports the ZF-BF.

### 1) Switching Threshold

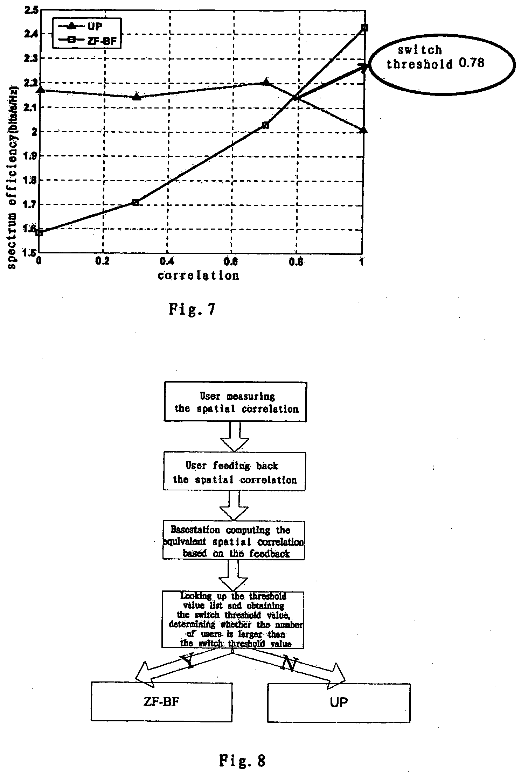

The switching between the UP and the ZF-BF is based on the spatial correlation. According to different channels, the present invention will switch determine different switching thresholds. Fig. 7 is a schematic diagram showing a simulation result of determining a priori value.

### 2) Switching Flow

As shown in Fig. 8, the switching flow is as follows.

Each user in the same cell (sector) measures the spatial transmission correlation respectively by using the formula $Corr_k^{Tx} = E\left\{H_k^H H_k\right\}$ where $Corr_k^{Tx}$ represents the spatial transmission correlation received by user $k$ at a receiving end and $H_k$ represents the channel matrix of user. Each user feeds the measured spatial transmission correlation to the base station. After the base station obtains the feedback information, it calculates the equivalent spatial transmission correlation $Corr_{eq}$ according to different spatial transmission correlations fed back from all the users by using the formula

$$Corr_{eq} = \frac{1}{K}\sum_{k=1}^{K} Corr_k^{Tx}$$ where $K$ represents the user number in the cell (sector). The base station compares the equivalent spatial transmission correlation with the switching threshold. When the equivalent spatial transmission correlation is larger than the switching threshold, if the user is in UP mode, the base station switches the user from UP mode to ZF-BF mode (notifies the user through signaling) and if the user is in ZF-BF mode, the base station does not perform any processing and the user remains the current status. When the equivalent spatial transmission correlation is smaller than the switching threshold, if the user is in ZF-BF mode, the base station switches the user from ZF-BF mode to UP mode (notifies the user through signaling) and if the user is in UP mode, the base station does not perform any processing and the user remains the current status.

### 3) Scheduling Method

All the users are scheduled together, all the users work in the same precoding mode and all the resource blocks work in the same precoding mode, i.e. UP or ZF-BF mode.

## 2. UE Specific (switching by individual user)

### 1) The switching threshold is in accordance with that of the Cell Specific.

### 2) Switching Flow

Each user in the same cell (sector) measures the spatial transmission correlation respectively by using the formula $Corr_k^{Tx} = E\left\{H_k^H H_k\right\}$ where $Corr_k^{Tx}$ represents the spatial transmission correlation received by user $k$ at a receiving end and $H_k$ represents the channel matrix of user. Each user feeds the measured spatial transmission correlation to the base station. After the base station obtains the feedback information, it compares the spatial transmission correlations fed back from different users with the switching thresholds stored in the base station. When the spatial transmission correlation fed back from the user is larger than the threshold, if the user is in UP mode and the number of antennas of the user supports the ZF-BF mode, the base station switches the user from UP mode to ZF-BF mode by notifying the user through signaling and if the user is in ZF-BF mode, the base station does not perform any processing and the user remains the current status. When the spatial transmission correlation fed back from the user is smaller than the threshold, if the user is in ZF-BF mode, the base station switches the user from ZF-BF mode to UP mode by notifying the user through signaling and if the user is in UP mode, the base station does not perform any processing and the user remains the current status.

### 3) Scheduling Method

Users work in the UP and users work in the ZF-BF compute and feed back their CQIs to the BS respectively and the base station schedules according to a certain scheduling principle and the CQIs fed back from all the users. Different users work in different precoding modes; different resource blocks work in different precoding modes. If the scheduling result of some resource block is that the user working in UP mode occupies this resource block, this resource block will work in UP mode; and if the scheduling result of some resource block is that the user working in ZF-BF mode occupies this resource block, this resource block will work in ZF-BF mode.

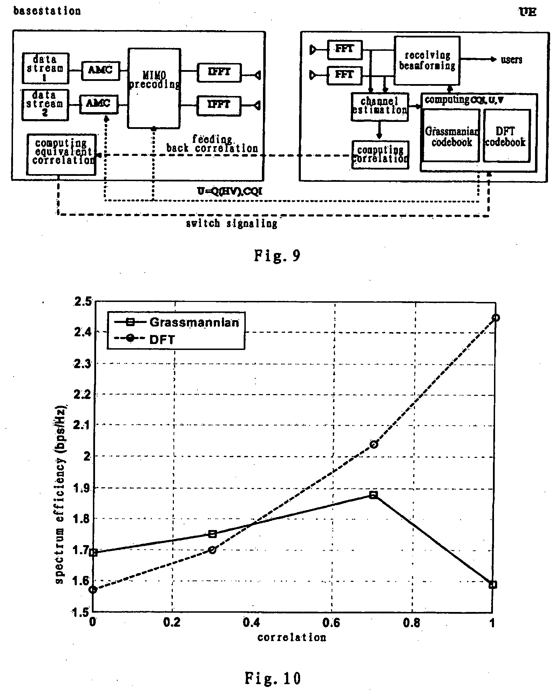

III. Switching between codebooks in ZF-BF (Fig. 9 is a schematic diagram showing architecture of a base station and a user equipment used in the switching between codebooks.)

1. Cell Specific (switching by whole cell)

1) Switching Threshold

Fig. 10 is a schematic diagram showing a simulation result of determining a priori value in the switching between codebooks. Different switching thresholds can be determined according to different channels and the switching between Grassmannian codebook and DFT codebook is performed according to the spatial correlation.

2) Switching Flow

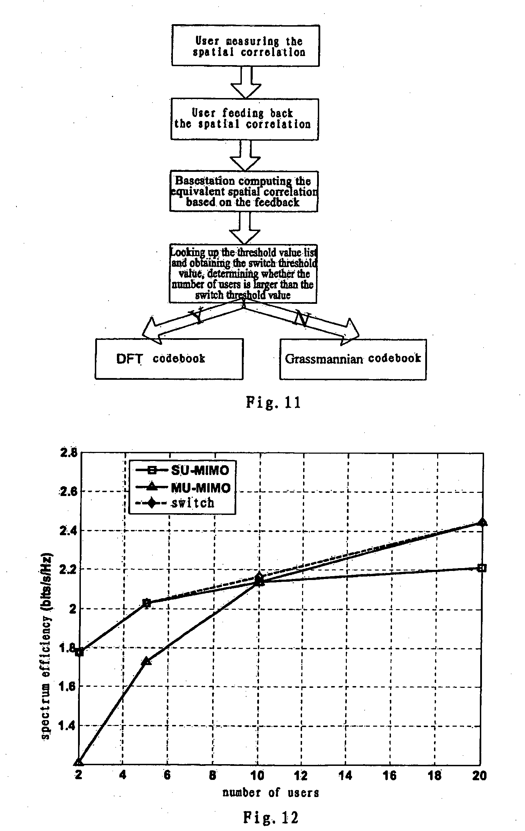

As shown in Fig. 11, the flow of switching between codebooks is as follows.

Each user in the same cell (sector) measures the spatial transmission correlation respectively by using the formula $Corr_k^{Tx} = E\{H_k^H H_k\}$ where $Corr_k^{Tx}$ represents the spatial transmission correlation received by user $k$ at a receiving end and $H_k$ represents the channel matrix of user. Each user feeds back the measured spatial transmission correlation to the base station. After the base station obtains the feedback information, it calculates the equivalent spatial transmission correlation $Corr_{eq}$ according to different spatial transmission correlations fed back from all the users by using the formula

$$Corr_{eq} = \frac{1}{K}\sum_{k=1}^{K} Corr_k^{Tx}$$

where $K$ represents the user number in the cell (sector). The base station compares the equivalent spatial transmission correlation with the switching threshold. When the equivalent spatial transmission correlation is larger than the switching threshold, if the user is in Grassmannian codebook mode, the base station switches the user from Grassmannian codebook mode to DFT codebook mode (notifies the user through signaling) and if the user is in DFT codebook mode, the base station does not perform any processing and the user remains the current status. When the equivalent spatial transmission correlation is smaller than the switching threshold, if the user is in DFT codebook mode, the base station switches the user from DFT codebook mode to Grassmannian codebook mode (notifies the user through signaling) and if the user is in Grassmannian codebook mode, the base station does not perform any processing and the user remains the current status.

3) Scheduling Method

All the users are scheduled together, all the users work in the same codebook mode and all the resource blocks work in the same codebook mode, i.e. Grassmannian codebook or DFT codebook.

2. UE Specific

1) The switching threshold is the same with that of the Cell Specific.

2) Switching Flow

Each user in the same cell (sector) measures the spatial transmission correlation respectively by using the formula $Corr_k^{Tx} = E\{H_k^H H_k\}$ where $Corr_k^{Tx}$ represents the spatial transmission correlation received by user $k$ at a receiving end and $H_k$ represents the channel matrix of user. Each user feeds back the measured spatial transmission correlation to the base station. After the base station obtains the feedback information, it compares the spatial transmission correlations fed back from different users with the switching thresholds stored in the base station. When the spatial transmission correlation fed back from the user is larger than the threshold, if the user is in Grassmannian codebook mode, the base station switches the user from Grassmannian codebook mode to DFT codebook mode by notifying the user through signaling and if the user is in DFT codebook mode, the base station does not perform any processing and the user remains the current status. When the spatial transmission correlation fed back from the user is smaller than the threshold, if the user is in DFT codebook mode, the base station switches the user from DFT codebook mode to the Grassmannian codebook mode by notifying the user through signaling and if the user is in the Grassmannian codebook mode, the base station does not perform any processing and the user remains the current status.

3) Scheduling Method

Users work in the Grassmannian codebook mode and users work in the DFT codebook mode calculate and feed their CQIs to the base station respectively and the base station schedules according to a certain scheduling principle and the CQIs fed back from all the users. Different users work in different precoding modes; different resource blocks work in different precoding modes. If the scheduling result of some resource block is that the user working in Grassmannian codebook mode occupies this resource block, this resource block will work in Grassmannian codebook mode; and if the scheduling result of some resource block is that the user working in DFT codebook mode occupies this resource block, this resource block will work in the codebook mode.

IV. Switching between large codebook and small codebook according to the user number in the MU-MIMO.

When the user number is larger than the threshold, the large codebook is adopted, otherwise the small codebook is adopted.

The switching can be also divided by the Cell Specific and the UE Specific. In the Cell Specific switching, all the users are scheduled together, all the users work in the same codebook mode and all the resource blocks work in the same codebook mode. In the UE Specific switching, different users work in different codebook modes. The resource block occupied by the user who works in the large codebook mode also works in the small codebook mode; the resource block occupied by the user who works in the large codebook mode also works in the small codebook mode.

Positive Effects of the Present Invention

Fig. 12 is a diagram for comparing switching of SU-MIMO-MU-MIMO mode in the present invention with separate SU-MIMO or MU-MIMO mode. This figure shows that compared with the single SU-MIMO and MU-MIMO which don't take into account the switching, the switching method according to the present invention has an optimal performance in different user number in a cell (sector).

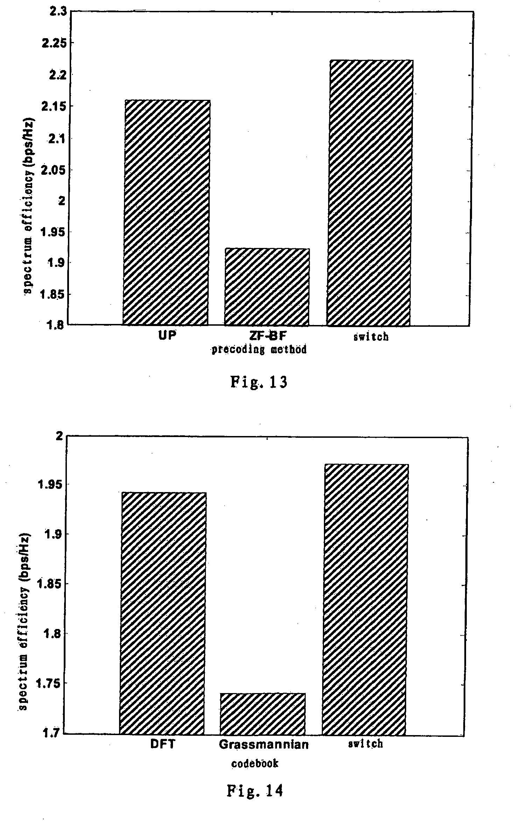

Fig. 13 is a diagram for comparing the precoding switching of the present invention with a separate UP and ZF-BF precoding. This figure shows the performance of the switching method according to the present invention is better than that of the UP and that of the ZF-BF.

Fig. 14 is a diagram for comparing the codebook switching of the present invention with the individual DFT or Grassmannian codebook switching. This figure shows performance of the switching method according to the present invention is better than that of DFT codebook and that of Grassmannian codebook.

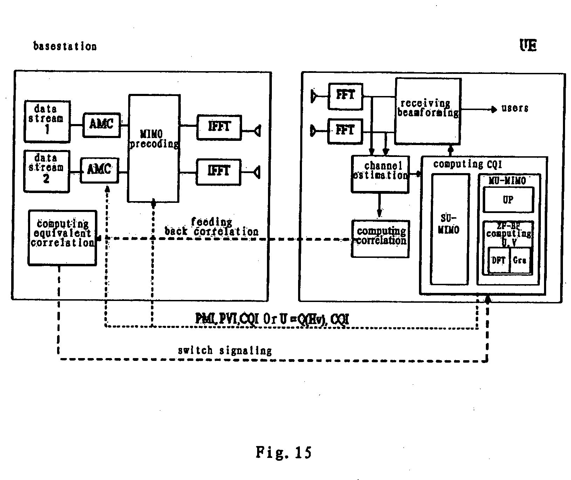

Fig. 15 is a schematic diagram showing an apparatus according to the present invention. As shown in the figure, the adaptive precoding apparatus in a MIMO system includes the following parts.

A spatial correlation feedback module located at the user equipment is used for feeding back the measured spatial correlation to the base station.

A switching module located in the user equipment is used for performing one or more of the following switching: switching between SU-MIMO mode and MU-MIMO mode, switching between unitary precoding and Zero-forcing Beamforming precoding and/or switching between Discrete Fourier Transform codebook and Grassmannian codebook. In addition, the switching module can have the three switching functions at the same time or can have one or two of the three functions.

An equivalent correlation calculating module is used for calculating an equivalent correlation $Corr_{eq}$ according to the formula $Corr_{eq} = \frac{1}{K} \sum_{k=1}^{K} Corr_k^{Tx}$ This module functions in the Cell Specific switching and does not function in the UE Specific switching.

In addition, there is a storage module (not shown in the figure) located in the base station, which is used for storing switching thresholds or a switching threshold table where the switching thresholds or the switching threshold table are corresponding to a spatial correlation and obtained according to priori values obtained at different testing conditions.

There is a determining module (not shown in the figure) located in the base station, which is used for performing a threshold comparison according to the switching threshold or the switching threshold table and the spatial correlation fed back from a user and notifying the user to perform the switching according to the comparison result.

There is a MIMO detecting module in the user equipment, which includes a SU-MIMO detecting module and a MU-MIMO detecting module, wherein the MU-MIMO detecting module further includes a Unitary precoding detecting module and a ZF-BF precoding detecting module, wherein the ZF-BF precoding detecting module further includes module based on the DFT codebook and module based on the Grassmannian codebook.

The above are only the preferred embodiments of the present invention. It should be noted that the present invention is defined and limited only by the scope of appended claims 1 - 24.

**Claims**

1. A method for adaptive precoding in a codebook-based MIMO system, the method comprising:

   step 1: obtaining a switching threshold or a switching threshold table corresponding to spatial transmission correlation based on priori values obtained by testing said MIMO system under different conditions;

   step 2: according to the switching threshold or the switching threshold table and in combination with the spatial transmission correlation, selecting to launch one or more of switchings including:

   switching between SU-MIMO mode and MU-MIMO mode in consideration of user number information;
   switching between unitary precoding and Zero-forcing Beamforming precoding in MU-MIMO mode;
   switching between Discrete Fourier Transform codebook and Grassmannian codebook in Zero-forcing Beamforming precoding;
   switching between a large size codebook and a small size codebook according to a user number information in MU-MIMO mode.

2. The method according to claim 1, wherein in step 2, the spatial transmission correlation is obtained by user feedback or by symmetry of the uplink channel and the downlink channel, wherein steps of obtaining the spatial transmission correlation by user feedback comprises:

each user in the same cell measures the spatial transmission correlation according to the formula $Corr_k^{Tx} = E\{H_k^H H_k\}$ where $Corr_k^{Tx}$ represents the spatial transmission correlation received by user $k$ at the receiving end and $H_k$ represents the channel matrix of user $k$, and then each user feeds the measured spatial transmission correlation to the base station.

3. The method according to claim 2, wherein in step 2, the switching between single use mode and MU-MIMO mode comprises:

step a, calculating the equivalent correlation after the base station obtaining the spatial transmission correlation fed back from the user; step b, the base station looking up the switching threshold table based on the equivalent correlation and obtaining the switching threshold indicating user number; and step c, determining whether the user number in the current cell is larger than the switching threshold and if yes, adopting MU-MIMO mode; otherwise adopting SU-MIMO mode.

4. The method according to claim 3, wherein in step c, when the user number in the current cell is larger than the switching threshold, if the user is in SU-MIMO mode, then send signaling to notify the user to switches to MU-MIMO mode and if the user is in MU-MIMO mode, do not perform operation; and when the user number in the current cell is smaller than the switching threshold, if the user is in SU-MIMO mode, do not perform operation and if the user is in MU-MIMO mode, send signaling to notify the user to switches to SU-MIMO mode.

5. The method according to claim 4, wherein in step c, all the users are scheduled together, all the users work in the same MIMO mode and all the resource blocks work in the same MIMO mode.

6. The method according to claim 2, wherein in step 2, the switching between SU-MIMO mode and MU-MIMO mode comprises:

step a1 looking up and obtaining the switching threshold after the base station obtaining the spatial transmission correlation fed back from the user; and step b1, if the spatial transmission correlation fed back from a user is larger than the switching threshold, adopting the MU-MIMO mode for the user, and otherwise adopting the SU-MIMO mode for the user.

7. The method according to claim 6, wherein different users work in different MIMO modes; the resource block occupied by a user working in SU-MIMO mode also works in SU-MIMO mode and the resource block occupied by a user working in MU-MIMO mode also works in MU-MIMO mode.

8. The method according to claim 2, wherein in step 2, the switching between unitary precoding and Zero-forcing Beamforming precoding comprises:

step a2. calculating the equivalent correlation after the base station obtaining the spatial transmission correlation fed back from the user; step b2. the base station looking up and obtaining the switching threshold based on the equivalent correlation; and step c2. determining whether the equivalent correlation is larger than the switching threshold and if yes, adopting Zero-forcing Beamforming precoding and otherwise adopting unitary precoding.

9. The method according to claim 8, wherein in step c2, all the users are scheduled together, all the users work in the same precoding mode and all the resource blocks work in the same precoding mode.

10. The method according to claim 2, wherein in step 2, the switching between unitary precoding and Zero-forcing Beamforming precoding comprises:

step a3. looking up and obtaining the switching threshold after the base station obtaining the spatial transmission correlation fed back from the user; and step b3. if the spatial transmission correlation fed back from a user is larger than the switching threshold, adopting Zero-forcing Beamforming precoding for the user, and otherwise adopting unitary precoding for the user.

11. The method according to claim 10, wherein different users work in different precoding modes; the resource block occupied by a user working in unitary precoding mode also works in unitary precoding mode and the resource block occupied by a user working in Zero-forcing Beamforming precoding mode also works in Zero-forcing Beamforming precoding mode.

**12.** The method according to claim 2, wherein in step 2, the switching between Discrete Fourier Transform codebook and Grassmannian codebook comprises:

　　step a4. calculating the equivalent correlation after the base station obtaining the spatial transmission correlation fed back from the user;
　　step b4. the base station looking up and obtaining the switching threshold based on the equivalent correlation; and
　　step c4. determining whether the equivalent correlation is larger than the switching threshold and if yes, adopting Discrete Fourier Transform codebook; otherwise adopting Grassmannian codebook.

**13.** The method according to claim 12, wherein in step c4, all the users are scheduled together, all the users work with the same codebook and all the resource blocks work with the same codebook.

**14.** The method according to claim 2, wherein in step 2, the switching between Discrete Fourier Transform codebook and Grassmannian codebook comprises:

　　step a5. looking up and obtaining the switching threshold after the base station obtaining the spatial transmission correlation fed back from the user; and
　　step b5. if the spatial transmission correlation fed back from a user is larger than the switching threshold, adopting Discrete Fourier Transform codebook for the user, and otherwise adopting Grassmannian codebook for the user.

**15.** The method according to claim 14, wherein different users work with different codebooks; the resource block occupied by a user working with Discrete Fourier Transform codebook also works with Discrete Fourier Transform codebook, and the resource block occupied by a user working with Grassmannian codebook also works with Grassmannian codebook.

**16.** The method according to claim 2, wherein in step 2, the switching between the large size codebook and the small size codebook comprises:

　　step a6. the base station looking up and obtaining the switching threshold representing the user number; and
　　step b6. determining whether the user number in the current cell is larger than the switching threshold and if yes adopting the large size codebook; otherwise adopting the small size codebook.

**17.** The method according to claim 16, wherein in step b6, all the users are scheduled together, all the users work with the same codebook and all the resource blocks work with the same codebook.

**18.** The method according to claim 16, wherein different users work with different codebooks; the resource block occupied by a user working with the large size codebook also works with the large size codebook, and the resource block occupied by a user working with the small size codebook also works with the small size codebook.

**19.** The method according to any one of claim 1 to claim 18, wherein in Step 1, based on different channels, different switching thresholds or different switching threshold tables are determined.

**20.** An apparatus for adaptive precoding in a codebook-based MIMO system, the apparatus comprising:

　　a storage module, located in a base station, for storing a switching threshold or a switching threshold table which are corresponding to spatial transmission correlation and obtained based on priori values obtained by testing said MIMO system under different conditions;
　　a determining module, located in the base station, for performing comparison between the threshold and the spatial correlation fed back from a user according to the switching threshold or the switching threshold table, and notifying the user to launch switching according to the comparison result;
　　a switching module located in a user equipment, for performing, based on said comparison result, one or more of switchings including: switching between SU-MIMO mode and MU-MIMO mode, switching between unitary precoding and Zero-forcing Beamforming precoding, switching between Discrete Fourier Transform codebook and Grassmannian codebook, and switching between a large size codebook and a small size codebook in unitary precoding;
　　a detecting module located in the user equipment, for performing, based on said comparison result, one or more of detections including detection of said SU-MIMO mode and MU-MIMO mode, detection of said unitary precoding and Zero-forcing Beamforming precoding, detection of said Discrete Fourier Transform codebook and Grassmannian codebook, and detection of said large size codebook and small size codebook with unitary precoding.

**21.** The apparatus according to claim 20, further including a spatial correlation feedback module located in the user equipment, for measuring the spatial correlation according to the formula

$$Corr_k^{Tx} = E\{H_k^H H_k\},$$ where $Corr_k^{Tx}$ represents the spatial correlation received by user $k$ at the receiving end and $H_k$ represents the channel matrix of user and then feeds the measured spatial correlation to the base station.

22. The apparatus according to claim 21, further including an equivalent correlation calculating module, for calculating the equivalent correlation.

23. A method for adaptive precoding in a codebook-based MIMO system, the method comprising:

step 1: obtaining a switching threshold or a switching threshold table corresponding to spatial receiving correlation based on priori values obtained by testing under different conditions;
step 2: according to the switching threshold or the switching threshold table and in combination with the spatial receiving correlation, selecting to launch one or more of switchings including:

switching between SU-MIMO mode and MU-MIMO mode in consideration of user number information;
switching between unitary precoding and Zero-forcing Beamforming precoding in MU-MIMO mode;
switching between Discrete Fourier Transform codebook and Grassmannian codebook in Zero-forcing Beamforming precoding;
switching between a large size codebook and a small size codebook according to user number information in MU-MIMO mode.

24. The method according to claim 23, wherein in step 2, the spatial receiving correlation is obtained by user feedback or by symmetry of the uplink channel and the downlink channel, wherein steps of obtaining the spatial receiving correlation by user feedback comprises:

each user in the same cell measures the spatial receiving correlation according to the formula $$Corr_k^{Rx} = E\{H_k H_k^H\}$$ where $Corr_k^{Rx}$ represents the spatial receiving correlation received by user $k$ at the receiving end and $H_k$ represents the channel matrix of user $k$, and then each user feeds the measured spatial receiving correlation to the base station.

**Patentansprüche**

1. Ein Verfahren für adaptive Vorcodierung in einem codebuchbasierten MIMO-System, wobei das Verfahren folgende Schritte aufweist:

Schritt 1: Erhalten einer Schaltschwelle oder einer Schaltschwellentabelle gemäß einer räumlichen Sendekorrelation auf der Basis von Vorabwerten, die durch Prüfen des MIMO-Systems unter unterschiedlichen Bedingungen erhalten werden;
Schritt 2: Auswählen gemäß der Schaltschwelle oder der Schaltschwellentabelle und in Kombination mit der räumlichen Sendekorrelation, dass ein oder mehrere Schaltvorgänge gestartet werden, Folgendes umfassend:

Schalten zwischen SU-MIMO-Modus und MU-MIMO-Modus unter Berücksichtigung von Benutzerzahlinformationen;
Schalten zwischen einheitlicher Vorcodierung und Zero-forcing-Beamforming-Vorcodierung im MU-MIMO-Modus;
Schalten zwischen Diskrete-Fourier-Transformation-Codebuch und Graßmann'schem Codebuch bei einer Zero-forcing-Beamforming-Vorcodierung;
Schalten zwischen einem Große-Größe-Codebuch großer Größe und einem Codebuch kleiner Größe gemäß Benutzerzahlinformationen im MU-MIMO-Modus.

2. Das Verfahren gemäß Anspruch 1, bei dem bei Schritt 2 die räumliche Sendekorrelation durch Benutzerrückmeldung oder durch Symmetrie des Aufwärtsverbindungskanals und des Abwärtsverbindungskanals erhalten wird, wobei die Schritte zum Erhalten der räumlichen Sendekorrelation durch Benutzerrückmeldung folgenden Schritt aufweisen:

jeder Benutzer in derselben Zelle misst die räumliche Sendekorrelation anhand der Formel $$Corr_k^{Tx} = E\{H_k^H H_k\},$$ wobei $Corr_k^{Tx}$ die durch einen Benutzer $k$ auf der Empfangsseite erhaltene räumliche Sendekorrelation darstellt und $H_k$ die Kanalmatrix des Benutzers $k$ darstellt, und danach führt jeder Benutzer die gemessene räumliche Sendekorrelation der Basisstation zu.

3. Das Verfahren gemäß Anspruch 2, bei dem bei Schritt 2 das Schalten zwischen Einfachverwendungsmodus und MU-MIMO-Modus folgende Schritte aufweist:

Schritt a, Berechnen der äquivalenten Korrelation, nachdem die Basisstation die von dem Benutzer zurückgemeldete räumliche Sendekorrelation erhält;

Schritt b, Nachschlagen in der Schaltschwellentabelle auf der Basis der äquivalenten Korrelation durch die Basisstation und Erhalten der schaltschwellenanzeigenden Benutzerzahl; und

Schritt c, Bestimmen, ob die Benutzerzahl in der aktuellen Zelle größer als die Schaltschwelle ist und, falls zutreffend, Übernehmen des MU-MIMO-Modus; andernfalls Übernehmen des SU-MIMO-Modus.

4. Das Verfahren gemäß Anspruch 3, bei dem bei Schritt c,
wenn die Benutzerzahl in der aktuellen Zelle größer als die Schaltschwelle ist, falls der Benutzer im SU-MIMO-Modus ist, dann eine Signalisierung gesendet wird, um den Benutzer über Schaltungen in den MU-MIMO-Modus zu benachrichtigen, und falls der Benutzer im MU-MIMO-Modus ist, der Vorgang nicht durchgeführt wird; und
wenn die Benutzerzahl in der aktuellen Zelle kleiner als die Schaltschwelle ist, falls der Benutzer im SU-MIMO-Modus ist, der Vorgang nicht durchgeführt wird, und falls der Benutzer im MU-MIMO-Modus ist, eine Signalisierung gesendet wird, um den Benutzer über Schaltungen in den SU-MIMO-Modus zu benachrichtigen.

5. Das Verfahren gemäß Anspruch 4, bei dem bei Schritt c alle Benutzer zusammen zeitlich geplant sind, alle Benutzer in demselben MIMO-Modus arbeiten und alle Ressourcenblöcke in demselben MIMO-Modus arbeiten.

6. Das Verfahren gemäß Anspruch 2, bei dem bei Schritt 2 das Schalten zwischen SU-MIMO-Modus und MU-MIMO-Modus folgende Schritte aufweist:

Schritt a1, Nachschlagen und Erhalten der Schaltschwelle, nachdem die Basisstation die von dem Benutzer zurückgemeldete räumliche Sendekorrelation erhält; und
Schritt b1, falls die von einem Benutzer zurückgemeldete räumliche Sendekorrelation größer als die Schaltschwelle ist, Übernehmen des MU-MIMO-Modus für den Benutzer und andernfalls Übernehmen des SU-MIMO-Modus für den Benutzer.

7. Das Verfahren gemäß Anspruch 6, bei dem unterschiedliche Benutzer in unterschiedlichen MIMO-Modi arbeiten; der Ressourcenblock, der durch einen im SU-MIMO-Modus arbeitenden Benutzer belegt ist, ebenfalls im SU-MIMO-Modus arbeitet und der Ressourcenblock, der durch einen im MU-MIMO-Modus arbeitenden Benutzer belegt ist, ebenfalls im MU-MIMO-Modus arbeitet.

8. Das Verfahren gemäß Anspruch 2, bei dem bei Schritt 2 das Schalten zwischen einheitlicher Vorcodierung und Zero-forcing-Beamforming-Vorcodierung folgende Schritte aufweist:

Schritt a2. Berechnen der äquivalenten Korrelation, nachdem die Basisstation die von dem Benutzer zurückgemeldete räumliche Sendekorrelation erhält;
Schritt b2. Nachschlagen und Erhalten der Schaltschwelle auf der Basis der äquivalenten Korrelation durch die Basisstation; und
Schritt c2. Bestimmen, ob die äquivalente Korrelation größer als die Schaltschwelle ist und, falls zutreffend, Übernehmen der Zero-forcing-Beamforming-Vorcodierung und andernfalls Übernehmen der einheitlichen Vorcodierung.

9. Das Verfahren gemäß Anspruch 8, bei dem bei Schritt c2 alle Benutzer zusammen zeitlich geplant sind, alle Benutzer in demselben Vorcodierungsmodus arbeiten und alle Ressourcenblöcke in demselben Vorcodierungsmodus arbeiten.

10. Das Verfahren gemäß Anspruch 2, bei dem bei Schritt 2 das Schalten zwischen einheitlicher Vorcodierung und Zero-forcing-Beamforming-Vorcodierung folgende Schritte aufweist:

Schritt a3. Nachschlagen und Erhalten der Schaltschwelle, nachdem die Basisstation die von dem Benutzer zurückgemeldete räumliche Sendekorrelation erhält; und
Schritt b3. Falls die von einem Benutzer zurückgemeldete räumliche Sendekorrelation größer als die Schaltschwelle ist, Übernehmen der Zero-forcing-Beamforming-Vorcodierung für den Benutzer und andernfalls Übernehmen der einheitlichen Vorcodierung für den Benutzer.

11. Das Verfahren gemäß Anspruch 10, bei dem unterschiedliche Benutzer in unterschiedlichen Vorcodierungsmodi arbeiten; der Ressourcenblock, der durch einen im einheitlichen Vorcodierungsmodus arbeitenden Benutzer belegt ist, ebenfalls im einheitlichen Vorcodierungsmodus arbeitet, und der Ressourcenblock, der durch einen im Zero-forcing-Beamforming-Vorcodierung-Modus arbeitenden Benutzer belegt ist, ebenfalls im Zero-forcing-Beamforming-Vorcodierung-Modus arbeitet.

12. Das Verfahren gemäß Anspruch 2, bei dem bei Schritt 2 das Schalten zwischen Diskrete-Fourier-Transformation-Codebuch und Graßmann'schem Codebuch folgende Schritte aufweist:

Schritt a4. Berechnen der äquivalenten Korrelation, nachdem die Basisstation die von dem Benutzer zurückgemeldete räumliche Sendekorrelation erhält;

Schritt b4. Nachschlagen und Erhalten der Schaltschwelle auf der Basis der äquivalenten Korrelation durch die Basisstation; und

Schritt c4. Bestimmen, ob die äquivalente Korrelation größer als die Schaltschwelle ist und, falls zutreffend, Übernehmen des Diskrete-Fourier-Transformation-Codebuchs; andernfalls Übernehmen des Graßmann'schen Codebuchs.

13. Das Verfahren gemäß Anspruch 12, bei dem bei Schritt c4 alle Benutzer zusammen zeitlich geplant sind, alle Benutzer mit demselben Codebuch arbeiten und alle Ressourcenblöcke mit demselben Codebuch arbeiten.

14. Das Verfahren gemäß Anspruch 2, bei dem bei Schritt 2 das Schalten zwischen Diskrete-Fourier-Transformation-Cadebuch und Graßmann'schem Codebuch folgende Schritte aufweist:

Schritt a5. Nachschlagen und Erhalten der Schaltschwelle, nachdem die Basisstation die von dem Benutzer zurückgemeldete räumliche Sendekorrelation erhält; und

Schritt b5. Falls die von einem Benutzer zurückgemeldete räumliche Sendekorrelation größer als die Schaltschwelle ist, Übernehmen des Diskrete-Fourier-Transformation-Codebuchs für den Benutzer und andernfalls Übernehmen des Graßmann'schen Codebuchs für den Benutzer.

15. Das Verfahren gemäß Anspruch 14, bei dem unterschiedliche Benutzer mit unterschiedlichen Codebüchern arbeiten; der Ressourcenblock, der durch einen mit dem Diskrete-Fourier-Transformation-Codebuch arbeitenden Benutzer belegt ist, ebenfalls mit dem Diskrete-Fourier-Transformation-Codebuch arbeitet, und der Ressourcenblock, der durch einen mit dem Graßmann'schen Codebuch arbeitenden Benutzer belegt ist, ebenfalls mit dem Graßmann'schen Codebuch arbeitet.

16. Das Verfahren gemäß Anspruch 2, wobei bei Schritt 2 das Schalten zwischen dem Codebuch großer Größe und dem Codebuch kleiner Größe folgende Schritte aufweist:

Schritt a6. Nachschlagen und Erhalten der Schaltschwelle, die die Benutzerzahl darstellt, durch die Basisstation; und

Schritt b6. Bestimmen, ob die Benutzerzahl in der aktuellen Zelle größer als die Schaltschwelle ist und, falls zutreffend, Übernehmen des Codebuchs großer Größe; andernfalls Übernehmen des Codebuchs kleiner Größe.

17. Das Verfahren gemäß Anspruch 16, bei dem bei Schritt b6 alle Benutzer zusammen zeitlich geplant sind, alle Benutzer mit demselben Codebuch arbeiten und alle Ressourcenblöcke mit demselben Codebuch arbeiten.

18. Das Verfahren gemäß Anspruch 16, bei dem unterschiedliche Benutzer mit unterschiedlichen Codebüchern arbeiten; der Ressourcenblock, der durch einen mit dem Codebuch großer Größe arbeitenden Benutzer belegt ist, ebenfalls mit dem Codebuch großer Größe arbeitet, und der Ressourcenblock, der durch einen mit dem Codebuch kleiner Größe arbeitenden Benutzer belegt ist, ebenfalls mit dem Codebuch kleiner Größe arbeitet.

19. Das Verfahren gemäß einem der Ansprüche 1 bis 18, bei dem bei Schritt 1 unterschiedliche Schaltschwellen oder unterschiedliche Schaltschwellentabellen auf der Basis unterschiedlicher Kanäle bestimmt werden.

20. Eine Vorrichtung für adaptive Vorcodierung in einem codebuchbasierten MIMO-System, wobei die Vorrichtung folgende Merkmale aufweist:

ein in einer Basisstation befindliches Speichermodul zum Speichern einer Schaltschwelle oder einer Schaltschwellentabelle, die einer räumlichen Sendekorrelation entsprechen und auf der Basis von Vorabwerten erhalten werden, die durch Prüfen des MIMO-Systems unter unterschiedlichen Bedingungen erhalten werden;

ein in der Basisstation befindliches Bestimmungsmodul zum Durchführen eines Vergleichs zwischen der Schwelle und der räumlichen Korrelation, die von einem Benutzer gemäß der Schaltschwelle oder der Schaltschwellentabelle zurückgemeldet wird, und Benachrichtigen des Benutzers, ein Schalten gemäß dem Vergleichsergebnis zu starten;

ein in einer Benutzereinrichtung befindliches Schaltmodul zum Durchführen eines oder mehrerer Schaltvorgänge auf der Basis des Vergleichsergebnisses, die Folgendes umfassen: Schalten zwischen SU-MIMO-Modus und MU-MIMO-Modus, Schalten zwischen einheitlicher Vorcodierung und Zero-forcing-Beamforming-Vorcodierung, Schalten zwischen Diskrete-Fourier-Transformation-Codebuch und Graßmann'schem Codebuch und Schalten zwischen einem Codebuch großer Größe und einem Codebuch kleiner Größe bei einheitlicher Vorcodierung;

ein in der Benutzereinrichtung befindliches Erfassungsmodul zum Durchführen einer oder mehrerer Erfassungen auf der Basis des Vergleichsergebnisses, die Folgendes umfassen: ein Erfassen des SU-MIMO-Modus und des MU-MIMO-Modus, ein Erfassen der einheitlichen Vorcodierung und der Zero-forcing-Beamforming-Vorcodierung, ein Erfassen des Diskrete-Fourier-Transformation-Codebuchs und des Graßmann'schen Codebuchs und ein Erfassen des Codebuchs großer Größe und des Codebuchs kleiner Größe bei einheitlicher Vorcodierung.

21. Die Vorrichtung gemäß Anspruch 20, die ferner ein in der Benutzereinrichtung befindliches Räumliche-Korrelation-Rückmeldungsmodul zum Messen der räumlichen Korrelation anhand der Formel $Corr_k^{Tx} = E\{H_k^H H_k\}$ umfasst, wobei $Corr_k^{Tx}$ die durch einen Benutzer $k$ auf der Empfangsseite empfangene räumliche Korrelation darstellt und $H_k$ die Kanalmatrix des Benutzers $k$ darstellt und danach die gemessene räumliche Korrelation der Basisstation zugeführt wird.

22. Die Vorrichtung gemäß Anspruch 21, die ferner ein Äquivalente-Korrelation-Berechnungsmodul zum Berechnen der äquivalenten Korrelation umfasst.

23. Ein Verfahren für adaptive Vorcodierung in einem codebuchbasierten MIMO-System, wobei das Verfahren folgende Schritte aufweist:

Schritt 1: Erhalten einer Schaltschwelle oder einer Schaltschwellentabelle gemäß einer räumlichen Empfangskorrelation auf der Basis von Vorabwerten, die durch Prüfen unter unterschiedlichen Bedingungen erhalten werden;
Schritt 2: Auswählen gemäß der Schaltschwelle oder der Schaltschwellentabelle und in Kombination mit der räumlichen Empfangskorrelation, dass ein oder mehrere Schaltvorgänge gestartet werden, wobei der Schritt Folgendes umfasst:

Schalten zwischen SU-MIMO-Modus und MU-MIMO-Modus unter Berücksichtigung von Benutzerzahlinformationen;
Schalten zwischen einheitlicher Vorcodierung und Zero-forcing-Beamforming-Vorcodierung im MU-MIMO-Modus;
Schalten zwischen Diskrete-Fourier=Transformation-Codebuch und Graßmann'schem Codebuch bei einer Zero-forcing-Beamforming-Vorcodierung;
Schalten zwischen einem Codebuch großer Größe und einem Codebuch kleiner Größe gemäß Benutzerzahlinformationen im MU-MIMO-Modus.

24. Das Verfahren gemäß Anspruch 23, bei dem bei Schritt 2 die räumliche Empfangskorrelation durch Benutzerrückmeldung oder durch Symmetrie der Aufwärtsverbindungskanals und des Abwärtsverbindungskanals erhalten wird, wobei die Schritte zum Erhalten der räumlichen Empfangskorrelation durch Benutzerrückmeldung folgenden Schritt aufweisen:

jeder Benutzer in derselben Zelle misst die räumliche Empfangskorrelation anhand der Formel $\quad Corr_k^{Rx} = E\{H_k^H H_k\},\quad$ wobei $Corr_k^{Rx}$ die durch einen Benutzer $k$ auf der Empfangsseite erhaltene räumliche Empfangskorrelation darstellt und $H_k$ die Kanalmatrix des Benutzers $k$ darstellt, und danach führt jeder Benutzer die gemessene räumliche Empfangskorrelation der Basisstation zu.

## Revendications

1. Procédé de pré-codage adaptatif dans un système MIMO à base de livre de codes, le procédé comprenant le fait de:

étape 1: obtenir un seuil de commutation ou un tableau de seuils de commutation correspondant à une corrélation de transmission spatiale sur base de valeurs à priori obtenues en testant ledit système MIMO dans différentes conditions;
étape 2: selon le seuil de commutation ou le tableau de seuils de commutation et en combinaison avec la corrélation de transmission spatiale, sélectionner de lancer une ou plusieurs des commutations comportant le fait de:

commuter entre le mode SU-MIMO et le mode MU-MIMO en tenant compte de l'information sur le nombre d'utilisateurs;
commuter entre le pré-codage unitaire et le pré-codage par formation de faisceau avec forçage à zéro en mode MU-MIMO;
commuter entre le livre de codes de Transformée de Fourier Discrète et le livre de codes Grassmannien en pré-codage par formation de faisceau avec forçage à zéro;
commuter entre un livre de codes de grand format et un livre de codes de petit format selon une information sur le nombre d'utilisateurs en mode MU-MIMO.

2. Procédé selon la revendication 1, dans lequel, à l'étape 2, la corrélation de transmission spatiale est obtenue par rétro-alimentation par l'utilisateur ou par symétrie du canal de liaison montante et du canal de liaison descendante, dans lequel les étapes consistant à obtenir la corrélation de transmission spatiale par rétro-alimentation par l'utilisateur comprennent le fait que:

chaque utilisateur dans la même cellule mesure la corrélation de transmission spatiale selon la formule $Corr_k^{Tx} = E\{H_k^H H_k\}$ où $Corr_k^{Tx}$ représente la corrélation de transmission spatiale reçue par l'utilisateur *k* à l'extrémité de réception et $H_k$ représente la matrice de canaux de l'utilisateur *k*, et ensuite chaque utilisateur alimente la corrélation de transmission spatiale mesurée vers la station de base.

3. Procédé selon la revendication 2, dans lequel, à l'étape 2, la commutation entre le mode d'usage unique et le mode MU-MIMO comprend le fait de:

étape a, calculer la corrélation équivalente après que la station de base ait obtenu la corrélation de transmission spatiale rétro-alimentée par l'utilisateur;
étape b, consulter, par la station de base, le tableau de seuils de commutation sur base de la corrélation équivalente et obtenir le seuil de commutation indiquant le nombre d'utilisateurs; et
étape c, déterminer si le nombre d'utilisateurs dans la cellule actuelle est supérieur au seuil de commutation et, dans l'affirmative, adopter le mode MU-MIMO; sinon, adopter le mode SU-MIMO.

4. Procédé selon la revendication 3, dans lequel, à l'étape c,
lorsque le nombre d'utilisateurs dans la cellule actuelle est supérieur au seuil de commutation, si l'utilisateur est en mode SU-MIMO, envoyer une signalisation pour notifier à l'utilisateur de commuter au mode MU-MIMO et, si l'utilisateur est en mode MU-MIMO, ne pas effectuer l'opération; et
lorsque le nombre d'utilisateurs dans la cellule actuelle est inférieur au seuil de commutation, si l'utilisateur est en mode SU-MIMO, ne pas effectuer l'opération et si l'utilisateur est en mode MU-MIMO, envoyer une signalisation pour notifier à l'utilisateur de commuter au mode SU-MIMO.

5. Procédé selon la revendication 4, dans lequel, à l'étape c, tous les utilisateurs sont programmés ensemble, tous les utilisateurs travaillent dans le même mode MIMO et tous les blocs de ressources fonctionnent dans le même mode MIMO.

6. Procédé selon la revendication 2, dans lequel, à l'étape 2, la commutation entre le mode SU-MIMO et le mode MU-MIMO comprend le fait de:

étape a1, consulter et obtenir le seuil de commutation après que la station de base ait obtenu la corrélation spatiale rétro-alimentée par l'utilisateur; et
étape b1, si la corrélation de transmission spatiale rétro-alimentée par un utilisateur est supérieure au seuil de commutation, adopter le mode MU-MIMO pour l'utilisateur et, sinon, adopter le mode SU-MIMO pour l'utilisateur.

7. Procédé selon la revendication 6, dans lequel différents utilisateurs travaillent en différents modes MIMO; le bloc de ressources occupé par un utilisateur travaillant en mode SU-MIMO fonctionne également en mode SU-MIMO et le bloc de ressources occupé par un utilisateur travaillant en mode MU-MIMO fonctionne également en mode MU-MIMO.

8. Procédé selon la revendication 2, dans lequel, à l'étape 2, la commutation entre le pré-codage unitaire et le pré-codage par formation de faisceau avec forçage à zéro comprend le fait de:

étape a2. calculer la corrélation équivalente après que la station de base ait obtenu la corrélation de transmission spatiale rétro-alimentée par l'utilisateur;
étape b2. consulter et obtenir, par la station de base, le seuil de commutation sur base de la corrélation équivalente; et
étape c2. déterminer si la corrélation équivalente est supérieure au seuil de commutation et, dans l'affirmative, adopter le pré-codage par formation de faisceau avec forçage à zéro et, sinon, adopter le pré-codage unitaire.

9. Procédé selon la revendication 8, dans lequel, à l'étape c2, tous les utilisateurs sont programmés ensemble, tous les utilisateurs travaillent dans le même mode de pré-codage et tous les blocs de ressources fonctionnent dans le même mode de pré-codage.

10. Procédé selon la revendication 2, dans lequel, à l'étape 2, la commutation entre le pré-codage unitaire et le pré-codage par formation de faisceau avec forçage à zéro comprend le fait de:

étape a3. consulter et obtenir le seuil de commutation après que la station de base ait obtenu la corrélation de transmission spatiale rétro-alimentée par l'utilisateur; et
étape b3. si la corrélation de transmission spatiale rétro-alimentée par un utilisateur est supérieure au seuil de commutation, adopter le pré-codage par formation de faisceau avec forçage à zéro pour l'utilisateur et, sinon, adopter le pré-codage unitaire pour l'utilisateur.

11. Procédé selon la revendication 10, dans lequel différents utilisateurs travaillent en différents modes de pré-codage; le bloc de ressources occupé par un utilisateur travaillant en mode de pré-codage unitaire fonctionne également en mode de pré-codage unitaire et le bloc de ressources occupé par un utilisateur travaillant en mode de pré-codage par formation de faisceau avec forçage à zéro fonctionne également en mode de pré-codage par formation de faisceau avec forçage à zéro.

12. Procédé selon la revendication 2, dans lequel, à l'étape 2, la commutation entre le livre de codes de Transformée de Fourier Discrète et le livre de codes Grassmannien comprend le fait de:

   étape a4. calculer la corrélation équivalente après que la station de base ait obtenu la corrélation spatiale rétro-alimentée par l'utilisateur;
   étape b4. consulter et obtenir, par la station de base, le seuil de commutation sur base de la corrélation équivalente; et
   étape c4. déterminer si la corrélation équivalente est supérieure au seuil de commutation et, dans l'affirmative, adopter le livre de codes de Transformée de Fourier Discrète; sinon, adopter le livre de codes Grassmannien.

13. Procédé selon la revendication 12, dans lequel, à l'étape c4, tous les utilisateurs sont programmés ensemble, tous les utilisateurs travaillent avec le même livre de codes et tous les blocs de ressources fonctionnent avec le même livre de codes.

14. Procédé selon la revendication 2, dans lequel, à l'étape 2, la commutation entre le livre de codes de Transformée de Fourier Discrète et le livre de codes Grassmannien comprend le fait de:

   étape a5. consulter et obtenir le seuil de commutation après que la station de base ait obtenu la corrélation de transmission spatiale rétro-alimentée par l'utilisateur; et
   étape b5. si la corrélation de transmission spatiale rétro-alimentée par un utilisateur est supérieure au seuil de commutation, adopter le livre de codes de Transformée de Fourier Discrète pour l'utilisateur et, sinon, adopter le livre de codes Grassmannien pour l'utilisateur.

15. Procédé selon la revendication 14, dans lequel différents utilisateurs travaillent avec différents livres de codes; le bloc de ressources occupé par un utilisateur travaillant avec le livre de codes de Transformée de Fourier Discrète fonctionne également avec le livre de codes de Transformée de Fourier Discrète, et le bloc de ressources occupé par un utilisateur travaillant avec le livre de codes Grassmannien fonctionne également avec le livre de codes Grassmannien.

16. Procédé selon la revendication 2, dans lequel, à l'étape 2, la commutation entre le livre de codes de grand format et le livre de codes de petit format comprend le fait de:

   étape a6. consulter et obtenir, par la station de base, le seuil de commutation représentant le nombre d'utilisateurs; et
   étape b6. déterminer si le nombre d'utilisateurs dans la cellule actuelle est supérieur au seuil de commutation et, dans l'affirmative, adopter le livre de codes de grand format; sinon, adopter le livre de codes de petit format.

17. Procédé selon la revendication 16, dans lequel, à l'étape b6, tous les utilisateurs sont programmés ensemble, tous les utilisateurs travaillent avec le même livre de codes et tous les blocs de ressources fonctionnent avec le même livre de codes.

18. Procédé selon la revendication 16, dans lequel différents utilisateurs travaillent avec des livres de codes différents; le bloc de ressources occupé par un utilisateur travaillant avec le livre de codes de grand format fonctionne également avec le livre de codes de grand format, et le bloc de ressources occupé par un utilisateur travaillant avec le livre de codes de petit format fonctionne également avec le livre de codes de petit format.

19. Procédé selon l'une quelconque des revendications 1 à 18, dans lequel, à l'étape 1, sur base de canaux différents sont déterminés différents seuils de commutation ou différents tableaux de seuils de commutation.

20. Appareil de pré-codage adaptatif dans un système MIMO à base de livre de codes, l'appareil comprenant:

   un module de mémoire, situé dans une station de base, destiné à mémoriser un seuil de commutation ou un tableau de seuils de commutation qui correspondent à une corrélation de transmission spatiale et sont obtenus sur base de valeurs à priori obtenues en testant ledit système MIMO dans des conditions différentes;
   un module de détermination, situé dans la station de base, destiné à effectuer une comparaison entre le seuil et la corrélation spatiale rétro-alimentée par un utilisateur selon le seuil de commutation ou le tableau de seuils de commutation, et notifier à l'utilisateur de lancer la commutation selon le résultat de comparaison;
un module de commutation, situé dans un équipement d'utilisateur, destiné à effectuer, sur base dudit résultat de comparaison, une ou plusieurs commutations comprenant: une commutation entre le mode SU-MIMO et le mode MU-MIMO, une commutation entre le pré-codage unitaire et le pré-codage par formation de faisceau avec forçage à zéro, une commutation entre le livre de codes de Transformée de Fourier Discrète et le livre de codes Grassmannien, et une commutation entre un livre de codes de grand format et un livre de codes de petit format en pré-codage unitaire;
un module de détection, situé dans l'équipement d'utilisateur, pour effectuer, sur base dudit résultat de comparaison, une ou plusieurs détections comprenant: une détection dudit mode SU-MIMO et dudit mode MU-MIMO, une détection dudit pré-codage unitaire et dudit pré-codage par formation de faisceau avec forçage à zéro, une détection dudit livre de codes de Transformée de Fourier Discrète et dudit livre de codes Grassmannien, et une détection dudit livre de codes de grand format et dudit livre de codes de petit format avec le pré-codage unitaire.

21. Appareil selon la revendication 20, comportant par ailleurs un module de rétro-alimentation de corrélation spatiale, situé dans l'équipement utilisateur, destiné à mesurer la corrélation spatiale selon la formule $Corr_k^{Tx} = E\{H_k^H H_k\}$, où $Corr_k^{Tx}$ représente la corrélation spatiale reçue par l'utilisateur $k$ à l'extrémité de réception et $H_k$ représente la matrice de canaux de l'utilisateur $k$, et ensuite alimenter la corrélation spatiale mesurée vers la station de base.

22. Appareil selon la revendication 21, comportant par ailleurs un module de calcul de corrélation équivalente destiné à calculer la corrélation équivalente.

23. Procédé de pré-codage adaptatif dans un système MIMO à base de livre de codes, le procédé comprenant le fait de:

étape 1: obtenir un seuil de commutation ou un tableau de seuils de commutation correspondant à une corrélation de réception spatiale sur base de valeurs à priori obtenues par test dans différentes conditions;
étape 2: selon le seuil de commutation ou le tableau de seuils de commutation et en combinaison avec la corrélation de réception spatiale, sélectionner de lancer une ou plusieurs commutations comportant le fait de:

commuter entre le mode SU-MIMO et le mode MU-MIMO en tenant compte de l'information sur le nombre d'utilisateurs;
commuter entre le pré-codage unitaire et le pré-codage par formation de faisceau avec forçage à zéro en mode MU-MIMO;
commuter entre le livre de codes de Transformée de Fourier Discrète et le livre de codes Grassmannien en pré-codage par formation de faisceau avec forçage à zéro;
commuter entre un livre de codes de grand format et un livre de codes de petit format selon l'information sur le nombre d'utilisateurs en mode MU-MIMO.

24. Procédé selon la revendication 23, dans lequel, à l'étape 2, la corrélation de réception spatiale est obtenue par rétro-alimentation par l'utilisateur ou par symétrie du canal de liaison montante et du canal de liaison descendante, dans lequel les étapes consistant à obtenir la corrélation de réception spatiale par rétro-alimentation par l'utilisateur comprennent le fait que:

chaque utilisateur dans la même cellule mesure la corrélation de réception spatiale selon la formule $Corr_k^{Rx} = E\{H_k^H H_k\}$ où $Corr_k^{Rx}$ représente la corrélation de réception spatiale reçue par l'utilisateur $k$ à l'extrémité de réception et $H_k$ r représente la matrice de canaux de l'utilisateur $k$, et ensuite chaque utilisateur alimente la corrélation de réception spatiale mesurée vers la station de base.

Fig. 1a

Fig. 1b

Fig. 2a

Fig. 2b

basestation                                                                                                UE

Fig. 3

number of users

Fig. 4a

Fig. 4b

Fig. 4c

Fig. 4d

Fig. 5

Fig. 6

Fig. 7

Fig. 8

Fig. 9

Fig. 10

```
┌─────────────────────────┐
│   User measuring the    │
│   spatial correlation   │
└─────────────────────────┘
             ⇓
┌─────────────────────────┐
│   User feeding back     │
│  the spatial correlation│
└─────────────────────────┘
             ⇓
┌─────────────────────────┐
│ Basestation computing the│
│equivalent spatial correlation│
│   based on the feedback │
└─────────────────────────┘
             ⇓
┌─────────────────────────┐
│Looking up the threshold value list│
│and obtaining the switch threshold│
│ value, determining whether the│
│number of users is larger than the│
│    switch threshold value │
└─────────────────────────┘
        Y  ⇙      ⇘  N
┌─────────────────┐   ┌─────────────────────┐
│  DFT codebook   │   │ Grassmannian codebook│
└─────────────────┘   └─────────────────────┘
```

Fig. 11

Fig. 12

Fig. 13

Fig. 14

basestation                                                                    UE

Fig. 15